# EUROPÄISCHE PATENTSCHRIFT

(11) **EP 0 698 515 B1**
(45) Veröffentlichungstag und Bekanntmachung des Hinweises auf die Patenterteilung: **30.08.2000**
(21) Anmeldenummer: 95112018.7
(22) Anmeldetag: 31.07.1995
(51) Int. Cl.: B60J 5/10

(54) **Laderaumtür für z.B. einen Kastenaufbau eines LKW**
Cargo door for e.g. a boxbody of a truck
Porte de chargement pour par example une caisse d'un camion

(30) Priorität: 26.08.1994 DE 9413774 U; 24.09.1994 DE 9415499 U; 12.12.1994 DE 9419874 U
(43) Veröffentlichungstag der Anmeldung: 28.02.1996
(73) Patentinhaber: PWP SA, CH-1530 Payerne (CH)
(72) Erfinder: Schaeffer, Götz, CH-1530 Payerne (CH)
(74) Vertreter: Müller, Enno, Dipl.-Ing.

(56) Entgegenhaltungen:
- EP-B- 0 362 060
- DE-A- 3 813 088
- FR-A- 1 339 484
- FR-A- 1 548 311
- FR-A- 2 614 851

## Beschreibung

Die Erfindung betrifft eine stirnseitige Laderaumtür gemäß dem Oberbegriff von Anspruch 1.

Der bekannte Stand der Technik erlaubt es, Laderaumtüren von z.B. dem Kastenaufbau eines Lastkraftwagens um 270° zu öffnen, so daß die Laderaumtür parallel zu der entsprechenden Seitenwand festgelegt werden kann und somit einen Be- oder Entladegang nicht weiter behindert. Damit an einem solchen Kastenaufbau keine wesentlich hervorstehenden Lager für Drehachsen angebaut werden müssen, ist ein um zwei Achsen drehendes Scharnierglied regelmäßig vorgesehen, dessen erste Achse kastenaufbaufest und dessen zweite Achse laderaumtürfest ausgebildet ist, wodurch ein Verschwenken der Laderaumtür um die Stirnseite der Seitenwand ermöglicht ist. Der bekannte Stand der Technik weist dazu in der Laderaumtür einen außenrandseitigen Durchbruch auf, in dem die zweite Achse und das Scharnierglied angeordnet sind. Bei einem Verschwenken der Laderaumtür steht damit das Scharnierglied über die Innenwandung der Laderaumtür vor. Durch den Durchbruch durch die Laderaumtür muß eine Schwächung z.B. eines Randprofils einer Laderaumtür in Kauf genommen werden, und darüber hinaus ist von besonderem Nachteil, daß durch den Durchbruch eine sichere, randnahe Abdichtung nahezu unmöglich ist.

Insbesondere ist aus der gattungsbildenden EP 0 362 060 B1 eine stirnseitige Laderaumtür für einen Kastenaufbau eines Lastkraftwagens bekannt, bei welcher die außenrandseitigen Durchbrüche in das Türblatt einfassenden Profilteilen ausgebildet sind und im Hinblick auf eine Abdichtung bereichsweise mit separaten, aus Kunststoff hergestellten Winkelteilen abgedeckt sind. Die Winkelteile erstrecken sich dabei in ihrer Längsrichtung entlang des scharnierseitigen Außenrandes der Laderaumtür über die Durchbrüche und über die daran angrenzenden bzw. von diesen berandeten Bereiche und sind an der Innenwandung des entsprechenden Randprofiles befestigt. Bezüglich ihres Querschnittes überdecken die Winkelteile den Randbereich der Innenwandung der Laderaumtür sowie teilweise die daran angrenzende scharnierseitige Stirnfläche, wobei in der entsprechenden Wandung des Winkelteiles Ausnehmungen für die Scharnierglieder vorgesehen sind. Auch mit diesen Winkelteilen verbleibt bei der bekannten Laderaumtür die Problematik, daß der Außenrand aufgrund der Durchbrüche, welche sich sowohl durch die Außen- als auch durch die Innenwandung erstrecken, eine erhebliche Reduzierung der Festigkeit erfährt. Die entsprechende Schwächung kann dabei durch die konstruktiv und herstellungstechnisch aufwendigen Winkelteile wegen deren für eine Dichtwirkung erforderlichen Nachgiebigkeit nicht zufriedenstellend ausgeglichen werden. Weiter ist zum Stand der Technik auf die DE 38 13 088 A 1 zu verweisen. Die aus dieser Druckschrift bekannte Laderaumtür besitzt zwar in der Außenwandung des Profils eine die Innenwandung unversehrt lassende Ausnehmung, unter Abdeckung des Scharniergliedes durch die Innenwandung zwischen der ersten und der zweiten Achse, jedoch ist es aus dieser Druckschrift schon nicht bekannt, daß die Laderaumtür am Außenrand eine Innenwandung zur dichtenden Zusammenwirkung mit dem Kastenaufbau aufweist. Vielmehr ist dort die dichtende Zusammenwirkung mit dem Kastenaufbau lediglich an der Stirnwand der Laderaumtür vorgesehen. Im weiteren sind die Scharnierglieder einteilig mit den Achsen ausgebildet. Zum Einsetzen der Scharnierglieder sind daher die Profile außenseitig in Längsrichtigung mit einem Schlitz versehen. Dies ist entsprechend mit einer durchgehenden Schwächung des Profils gerade im Randbereich versehen.

Ausgehend von dem zunächst genannten Stand der Technik gemäß der EP 362 060 B1 beschäftigt sich die Erfindung mit der technischen Problematik, eine Laderaumtür zur Verfügung zu stellen, deren Stabilität weitestgehend beibehalten ist und die gegenüber den Stirnseiten des Bodens, des Dachs und insbesondere der Seitenwände z.B. eines Kastenaufbaus eines Lastkraftwagens sicher abdichtbar ist.

Gelöst ist diese Aufgabe beim Gegenstand des Anspruches 1.

Es ist damit erreicht, daß die Laderaumtür gleichsam einen Rahmen aufweist, der auch im Bereich der Scharniere auf der im Einbauzustand dem Kastenaufbau des Lastkraftwagens zugewandten Seite durchgängig gestaltet ist. Darüber hinaus bietet dieser Rahmen die Möglichkeit, Maßnahmen zur dichtenden Zusammenwirkung mit dem Kastenaufbau durchgängig, auch nicht durch den Einbau eines Scharniers beeinträchtigt, d. H. integral durchgehend auszuführen.

Die Laderaumtür ist an ihrer Innenwandung, d.h. dichtungsbreitseitig, mit einer Überlappung versehen ist, die eine Stirnseite z.B. der Seitenwand in Längserstreckung durchgängig überlappt, daß die Laderaumtür in ihrer Außenwandung eine zur Seitenwand hin gerichtete Ausnehmung aufweist und daß in der Ausnehmung das im wesentlichen nur von außen her einsetzbare Scharnierglied angeordnet ist, wobei insbesondere bevorzugt die Innenwandung im Bereich der Überlappung mit einer durchgängigen Dichtung versehen ist.

Die in der Außenwandung der Laderaumtür vorgesehene Ausnehmung läßt die Innenwandung unversehrt, was die Stabilität der Laderaumtür gerade im Scharnierbereich beträchtlich erhöht. Damit ist es ebenfalls ermöglicht, daß die Stirnseite der Seitenwand über ihre volle Länge von einer Überlappung der Laderaumtür überdeckt ist. Dichtungsprobleme bezüglich eines Durchbruches treten damit konstruktionsbedingt bei einer Laderaumtür nach der Erfindung nicht mehr auf. Insbesondere werden Dichtungsprobleme auch dadurch wirksam verhindert, daß bevorzugt in dem Bereich der Überlappung eine durchgängige Dichtung zwischen der Stirnseite der Seitenwand und der Laderaumtür vorgesehen ist.

Es ist nach der Erfindung vorgesehen, daß die Innenwandung mit der Überlappung gegenüber der Außenwandung vorsteht und daß der zwischen der Innen- und Außenwandung liegende Außenrand von einer Schnittlinie an zur Außenwandung hin bogenförmig ausgebildet ist, wobei die Schnittlinie in einer zur geschlossenen Laderaumtür parallelen Ebene durch die erste Achse liegt, wobei bevorzugt auch die zweite Achse in der zur geschlossenen Laderaumtür parallelen Ebene liegt. Diese Maßnahme stellt sicher, daß an der Stirnseite der Seitenwand genügend Raum für die Lagerung der ersten Achse verbleibt, da der Außenrand in jeder Scharnierstellung von der ersten Achse ausreichend beabstandet ist.

In vorteilhafter konstruktiver Ausgestaltung durchsetzt die erste Achse das Scharnierglied und ist die zweite Achse in der Laderaumtür drehbar gelagert, wobei bevorzugt die zweite Achse das Scharnierglieds ebenfalls durchsetzt und ein Querschnitts-Profil aufweist derart, daß das Scharnierglied die zweite Achse form- und kraftschlüssig umschließt. Da beide Achsen das Scharnierglied durchsetzen, kann dieses als einfaches Profilstück ausgeführt werden. Durch eine entsprechende Ausbildung des Scharniergliedes oder dem Scharnierglied zugeordneter Einsätze, z.B. aus Hartplastik, umschließt dieses die zweite Achse form- und kraftschlüssig, wozu das Querschnitts-Profil der zweiten Achse bevorzugt flach oval ausgebildet ist. Alternativ kann die Achse auch als Rundstab vereinfacht ausgeführt sein, wobei dann die Achse bevorzugt aus einem V2A-Stahl besteht. Besonders bevorzugt ist es in diesem Zusammenhang, wenn zwar der Ovalquerschnitt der zweiten Achse beibehalten wird, und zwar aus einem vergleichsweise weicheren Werkstoff, wie Aluminium. Wobei dann jedoch weiter innerhalb des Ovalquerschnitts eine Hilfsachse angeordnet ist, mit rundem Querschnitt, beispielsweise aus dem genannten V2A-Werkstoff. Diesem Gedanken wird auch eine selbständige Bedeutung beigemessen. Bei einem Türaufbau oder einem Bordwandaufbau für einen Lastkraftwagen, der aus Aluminium besteht, kann als Achse ein Zweifachelement vorgesehen sein, daß aus einem äußeren ersten Element und einem inneren zweiten Element besteht. Das äußere erste Element kann bevorzugt aus dem Werkstoff der Tür oder des Aufbaus, hier also Aluminium, bestehen, während das zweite Teil aus einem festeren Werkstoff, wie insbesondere Stahl dann bevorzugt besteht. Darüber hinaus ist in diesem Zusammenhang auch gegebenenfalls von Bedeutung, daß das äußere Achsenelement zumindest teilweise, beispielsweise bei Durchsetzung eines Scharnieres, formschlüssig an dieses angepaßt ist, während das innere Element dann einen üblichen Kreisquerschnitt aufweisen kann. Es ist natürlich auch möglich, daß auch das innere, aus dem festeren Werkstoff bestehende Achsenelement in gleicher Weise formschlüssig eingepaßt ist. Die formmäßige Anpassung ist insbesondere auch dann bevorzugt, wenn mehrere Scharniere vorgesehen sind, die gemeinsam von der zweiten Achse durchsetzt werden, wobei die Länge der zweiten Achse der Höhe der Laderaumtür etwa entspricht. Hierdurch wird sichergestellt, daß um die zweite Achse eine gleichmäßige Drehbewegung erfolgt und innerhalb der Türe keine Spannungen auftreten. Dabei ist vorgesehen, daß die zweite Achse in laderaumtürfesten Lagern von runden Aufnahmequerschnitt gehalten ist, wobei die Lager die Seitenflächen der Ausnehmung jeweils abdekkend angeordnet sind und jeweils mit einer Nase in einer Aussparung im Außenrand verriegeln. Dichtungsprobleme an diesen Seitenflächen bzw. der zweiten Achse selbst treten damit nicht mehr auf.

In Ausgestaltung ist der Erfindung ist weiter vorgesehen, den Öffnungswinkel des Scharniers zu begrenzen.

Der maximale Öffnungswinkel von 270° wird von einem auf einen türfesten Anschlagsteg auftreffenden Ansatznocken des Scharniergliedes begrenzt und der Öffnungswinkel von 0° dadurch, daß das Scharnierglied mit einer Anschlagseite parallel zur zweiten Achse auf eine türfeste Anschlagfläche auftritt. Dabei sind alle Anschläge und Gegenflächen innerhalb der Ausnehmung jeweils angeordnet.

Es ist vorgesehen, daß die erste Achse in wenigstens zwei auf der Stirnseite der Seitenwand und vor dem Außenrand der Laderaumtür angeordneten Lagerböckchen gehalten ist und daß wenigstens ein Lagerbock eine quer zur Achse verlaufende, zum Außenrand geöffnete Sacklochbohrung aufweist zur Aufnahme eines Schwerspannstiftes. Es ist damit die erfindungsgemäße Laderaumtür auch zollsicher ausgeführt, da auch die außen auf der Stirnseite liegende Achslagerung nicht ohne Zerstörung geöffnet werden kann.

Nach der Erfindung ist weiter vorgesehen, daß die Laderaumtür randseitig von Profilen aus Aluminium eingefaßt ist, wobei das seitenwandseitige Profil Aussparungen für Scharnierglieder aufweist. In Weiterbildung der Erfindung können die Profile einen gleichen Querschnitt aufweisen. Die Verwendung nur eines Profils an allen vier Außenrändern der Laderaumtür bietet erhebliche produktionstechnische Vorteile, wobei nach der Erfindung die Laderaumtür auf Überlappungen der Innenwandung mit den Stirnseiten des Bodens, der Seitenwände und des Daches mit einer durchgängigen Dichtung versehen ist, zu deren einfacher Befestigung bevorzugt die Innenwandung im Bereich dieser Überlappungen mit durchgängigen hinterschnittenen Nuten versehen ist. Dichtungsprobleme im Bereich anstoßender oder unterbrochener Dichtungen können damit nicht mehr auftreten.

Nach weiteren Merkmalen der Erfindung ist vorgesehen, daß die Außenränder und die Außenwandung mit hinterschnittenen Nuten am Beginn bzw. Ende des Bogens des Außenrandes versehen sind zur Aufnahme von Nasen an rechtwinklig zueinander stehenden Schenkeln eine T-förmigen Dichtung. Diese Maßnahme eignet sich insbesondere bei zweiflügeligen Laderaumtüren, bei denen bevorzugt vorgesehen ist, daß bei geschlossenen Türen die zwei aneinander benachbarten Außenränder gering beabstandet zueinander angeordnet sind, daß ein erster Flügel eine erste T-förmige Dichtung, gehalten in den außenrandseitig und den außenwandseitig angeordneten Nuten aufweist und daß ein zweiter Flügel eine zweite T-förmige Dichtung, gehalten in den außenrandseitigen und innenwandig angeordnete Nuten, aufweist. In vorteilhafter Weise sind damit auch die Dichtungsprobleme aneinanderstoßender Türflügel gelöst.

Letztlich ist in Weiterbildung der Erfindung zur Verriegelung einer Laderaumtür vorgesehen, daß in der Laderaumtür eine Übertragungsstange um ihre Längsachse verdrehbar gelagert ist, die die Laderaumtür mit Überständen durchsetzt, und bei der ein erster Überstand in einem Drehkopf mit einem ersten Fortsatz endet, ein zweiter Überstand in einer Handhabe mit einem zweiten Fortsatz endet und bei der erster und zweiter Fortsatz in verriegeltem Zustand der Laderaumtür jeweils in eine schuhförmige Aufnahme eingreifen, die auf Stirnseiten des Kastenaufbaus angeordnet sind. Insbesondere kann eine Drehlagerung der Übertragungsstange in den bereits angesprochenen Profilen erfolgen, wodurch eine sehr geschützte Anordnung der Übertragungsstange gegeben ist. Für eine leichte Handhabbarkeit ist weiter vorgesehen, daß die Handhabe von der Übertragungsstange nach Art eines zweiarmigen Hebels in einen Handgriff und den zweiten Fortsatz geteilt wird. Entsprechend der Länge des Handgriffs und damit des wirksamen Hebelarms ist eine sehr leichte Verriegelung und Öffnung der Laderaumtür nach der Erfindung gegeben. Dies vor allem auch dann, wenn vorgesehen ist, daß bei Verdrehen der Übertragungsstange mittels des Handgriffs zum Öffnen der Laderaumtür die Fortsätze sich aus der jeweiligen Aufnahme heraus drehend die Laderaumtür von den Stirnseiten des Kastenaufbaues wegdrücken und nach einem Verdrehwinkel von etwa 90° von der Aufnahme freigegeben werden. Dabei weist eine Aufnahme einen Überstand auf, welcher im Verschlußzustand einen zweiten Fortsatz übergreift und wobei die Aufnahme weiter eine gekrümmt verlaufende Abdrückfläche aufweist für eine Abdruckbewegung des zweiten Fortsatz im Zuge eines Öffnungsvorganges und wobei in einem Querschnitt der Überstand und die Abdrückfläche im wesentlichen sich zu einer U-förmigen Gestaltung ergänzen. Damit kann eine Öffnung der Laderaumtür nur in einer ganz speziellen Verdrehstellung der Übertragungsstange erfolgen, was eine sichere Verriegelung der Laderaumtür bedeutet. Zur weiteren Sicherung der Verriegelung ist vorgesehen, daß die Handhabe eine federnd gelagerte Sperrklinke aufweist und daß die Sperrklinke bei verriegelter Laderaumtür einen Rastvorsprung hintergreift, der an einer Stirnseite des Kastenaufbaues angeordnet ist. Für eine zollsichere Verriegelung der Laderaumtür kann in Ausgestaltung der Erfindung ferner vorgesehen sein, daß auf einer Stirnseite des Kastenaufbaus ein Bügel aufgesetzt ist, daß von dem Bügel zwei Schenkel abragen, welche den Handgriff zwischen sich einschließen und daß die Schenkel jeweils Durchbrüche aufweisen, die mit Durchgangsbohrungen im Handgriff fluchten. Dies ermöglicht eine einfache und sichere Plombierung des Handgriffs in seiner Schließstellung und erlaubt darüber hinaus einen sicheren Verschluß z.B. durch ein Vorhängeschloß. Bevorzugt weist der Bügel einen der Stirnseite vorstehenden Rastvorsprung auf, welcher von der Verriegelungsnase der Sperrklinke untergriffen wird. Eingriffe in die Stirnseite des Kastenaufbaus selbst sind damit vermieden. In weiterer vorteilhafter Ausgestaltung ist ferner noch vorgesehen, daß an dem Handgriff die Sperrklinke um eine Achse parallel zur Übertragungsstange schwenkbar gelagert ist, daß die Sperrklinke einen Durchbruch im Handgriff durchsetzt und daß von der Sperrklinke ein Betätigungshebel hin zu dem freien Ende des Handgriffs abragt. Dabei ist zur Betätigung der Sperrklinke der sich im wesentlichen parallel zu dem Handgriff erstreckende Handhabungsfortsatz der Sperrklinke in entgegengesetzter Drehrichtung bezüglich des Handgriffs zu betätigen. Es kann damit das freie Ende des Handgriffs zum Öffnen der Laderaumtür erfaßt werden, wo bei gleichzeitig mittels des Daumens der Betätigungshebel niedergedrückt wird und die Sperrklinke durch diese Bewegung entriegelt wird.

Weitere vorteilhafte konstruktive Merkmale sind in den Unteransprüchen gegeben.

Die Erfindung wird anhand der Zeichnung, in der lediglich ein Ausführungsbeispiel dargestellt ist, näher erläutert. In der Zeichnung zeigt:
- Fig. 1: in Draufsicht eine zweiflügelige Laderaumtür nach der Erfindung,
- Fig. 2: einen Schnitt gemäß der Linie II-II in Figur 1,
- Fig. 3: einen Teilschnitt entsprechend Figur 2 bei geöffneter Laderaumtür,
- Fig. 4: im Querschnitt eine Ausnehmung zur Aufnahme des Scharniergliedes nach Figur 5,
- Fig. 5: ein Scharnierglied-Profil,
- Fig. 6: in gegenüber Figur 1 vergrößerter Darstellung in Draufsicht ein Scharnier,
- Fig. 7: einen Schnitt durch Figur 6 gemäß der Linie VII-VII,
- Fig. 8: einen Schnitt durch Figur 1 gemäß der Linie VIII-VIII,
- Fig. 9: einen Schnitt durch Figur 1 gemäß der Linie IX-IX,
- Fig. 10: in Draufsicht gemäß Figur 1 eine vergrößerte Darstellung der Verschlußvorrichtung,
- Fig. 11: eine schuhförmige Aufnahme in Draufsicht gemäß Figur 1,
- Fig. 12: einen Schnitt gemäß der Linie XII-XII in Figur 11,
- Fig. 13: einen Drehkopf in Draufsicht entsprechend Figur 1,
- Fig. 14: einen Schnitt gemäß der Linie XIV-XIV in Figur 13,
- Fig. 15: eine Handhabe in Draufsicht gemäß Figur 1,
- Fig. 16: eine Seitenansicht eines Bügels und
- Fig. 17: den Bügel in Draufsicht gemäß Figur 1.

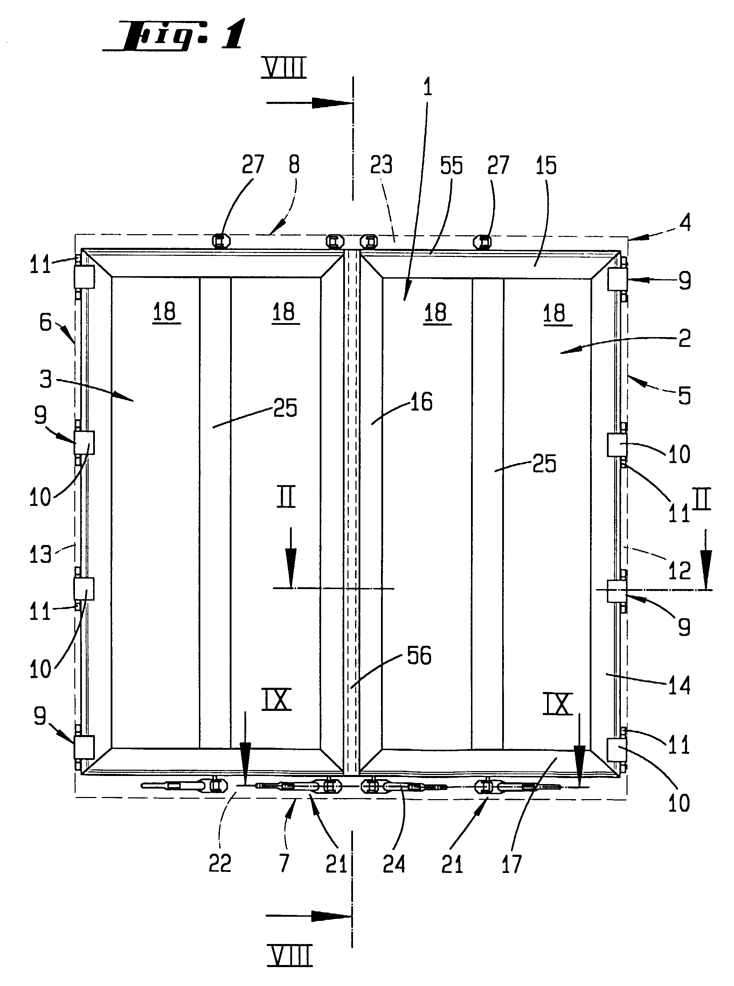

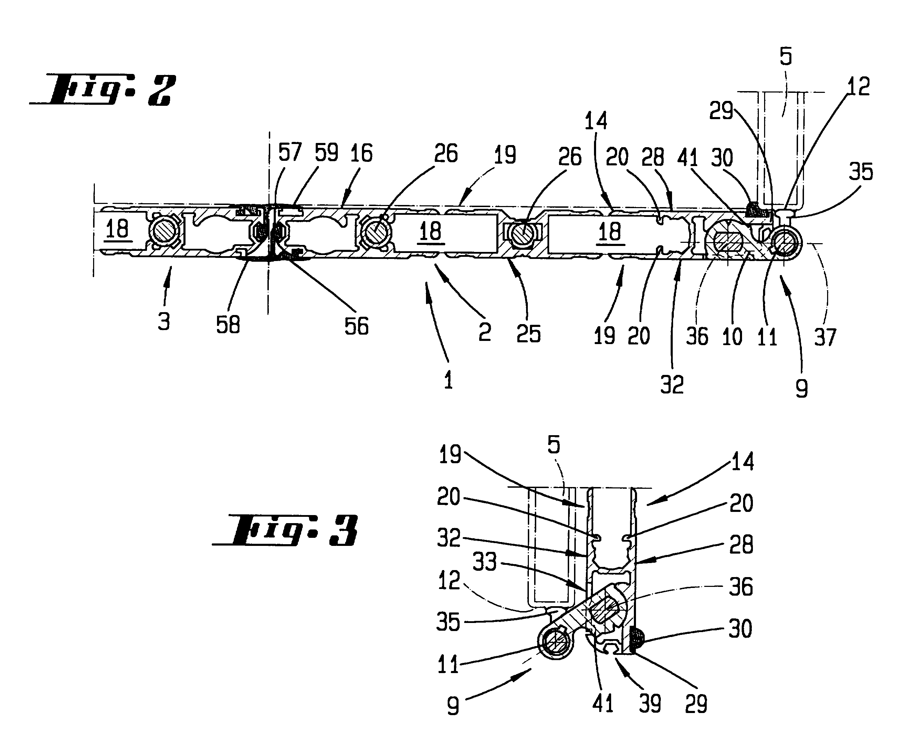

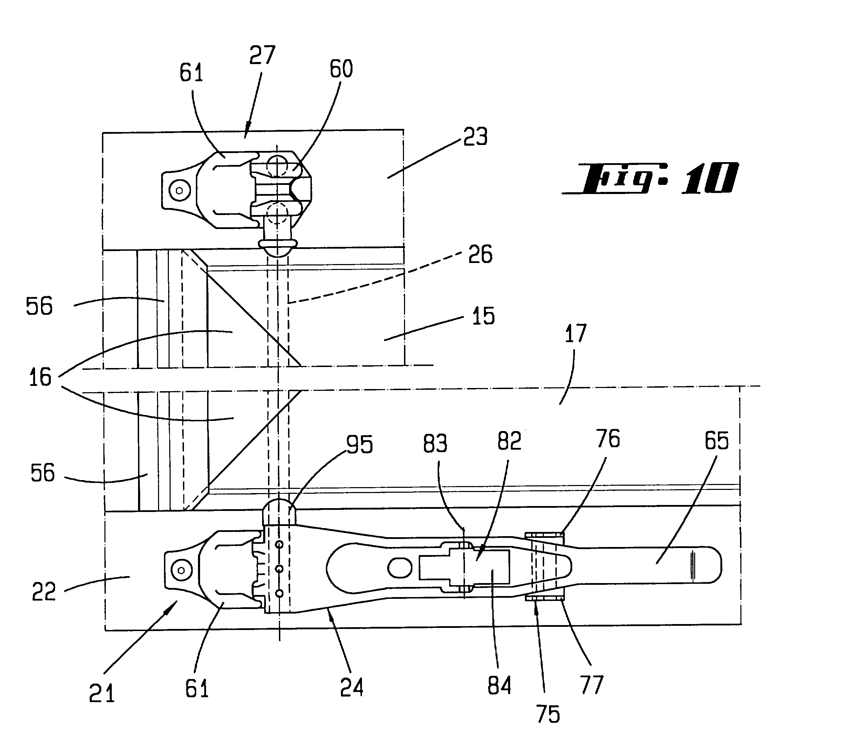

In Figur 1 ist in Draufsicht eine Laderaumtür 1, bestehend aus zwei Flügeln 2,3 eines Kastenaufbaus 4 eines nicht näher dargestellten LKWs gezeigt. Der Kastenaufbau 4 besteht aus zwei Seitenwänden 5,6, Boden 7 und Dach 8. Beide Flügel 2,3 sind mit jeweils vier Scharnieren 9 an den Seitenwänden 5,6 angeschlagen. Es weisen die Scharniere 9 jeweils ein Scharnierglied 10 auf, welches um zwei Achsen drehbar gelagert ist. Die erste Achse 11 ist jeweils vor einer entsprechenden Stirnseite 12,13 der jeweiligen Seitenwand 5,6 gelagert. Jeder Flügel 2,3 weist randseitig Profile 14,15,16,17 gleichen Querschnittes auf, vergleiche hierzu Figuren 2 und 8. Zur Einfassung eines Türblattes 18 sind die Profile 14 bis 17 türblattseitig in bekannter Art mit Zangen 19 zur Einfassung jeweils eines Türblatts 18 versehen. Innerhalb der Zange 19 sind Anschläge 20 zur genauen Positionierung der Profile 14 bis 17 auf Türblättern 18 angeordnet. Zum Verschließen der Türflügel 2,3 dienen Verriegelungsvorrichtungen 21, vergleiche auch Figur 9, mit denen die jeweils unteren Profile 17 an der Stirnseite 22 des Bodens 7 bzw. die oberen Profile 15 an der Stirnseite 23 des Daches 8 festgelegt werden können. Um jede Verriegelungsvorrichtung 21 mit nur einer Handhabe 24 zu betätigen, ist in den Profilen 16,16 bzw. Mittelprofilen 25 jeweils eine Übertragungsstange 26 zur Betätigung der oberen Verriegelungen 27 angeordnet, vergleiche hierzu auch Figur 8.

Die Flügel 2,3 der Laderaumtür 1 sind zueinander spiegelbildlich ausgeführt, was im wesentlichen lediglich durch ein Drehen und teilweises Versetzen gleicher Bauteile möglich ist. Von daher sind im weiteren auch gleiche Bauteile mit gleichen Positionsziffern bezeichnet.

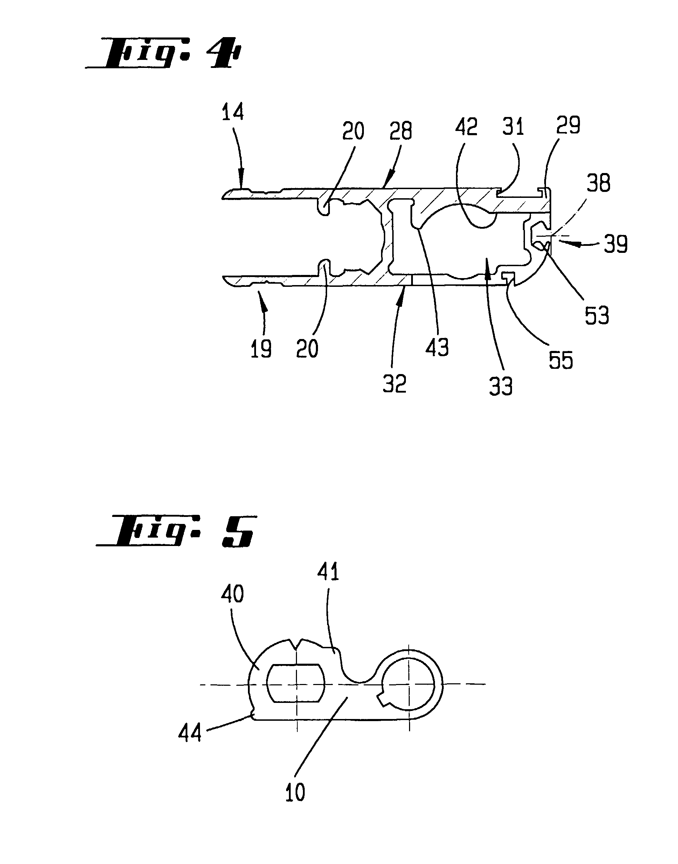

Die Figuren 2 und 3 zeigen einen Schnitt in gleicher Höhe gemäß der Linie II-II in Figur 1, wobei die Türblätter 18 jedoch verkürzt dargestellt sind und Figur 3 einen Schnitt durch ein Scharnier 9 in geöffnetem Zustand zeigt.

Die Schnitte zeigen, daß die dichtungsbreitseitige Innenwandung 28 der Laderaumtür 1, hier das Profil 14, zur dichtenden Zusammenwirkung mit dem Kastenaufbau mit einer Profilierung in Form einer Überlappung 29 versehen ist. Die Stirnseite 12 der Seitenwand 5 ist über ihre Längserstreckung durchgängig, d.h. vom Boden 7 bis unter das Dach 8, von der Überlappung 29 überdeckt. Auch das obere Profil 15 sowie das untere Profil 17, die gleiche Profilquerschnitte wie das Profil 14 aufweisen, vergleiche hierzu auch Figur 8, überlappen entsprechend die Stirnseite 20,23 des Bodens 7, bzw. des Dachs 8. Im Bereich dieser Überlappungen 29 ist die Innenwandung 28 mit einer durchgängigen Dichtung 30, bevorzugt einem Gummihohlprofil versehen. Gehalten ist die Dichtung 30 in einer umlaufenden hinterschnittenen Nut 31.

Es ist damit die Innenwandung 28 des Flügels 2 der Laderaumtür 1 vollständig mit der einzigen, durchgängigen Dichtung 30 gegen die Stirnwände 12, 22, 23 abgedichtet.

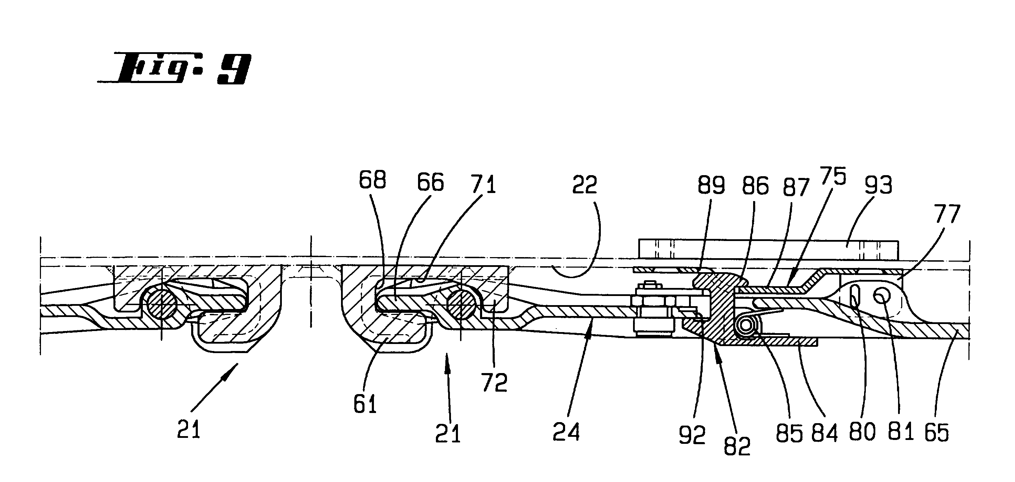

In der Außenwandung 32 des Flügels 2 der Laderaumtür 1 ist für jedes Scharnier 9 eine zur Seitenwand 5 bzw. 6 hin gerichtete Ausnehmung 33 angeordnet, in die das Scharnierglied 10 von außen eingesetzt ist. Das Scharnierglied 10 wird von der ersten Achse 11, bevorzugt aus Stahl, durchsetzt, die in Figur 2 vor der Stirnseite 12 der Seitenwand 5 liegt. Gehalten ist die Achse 11 in stirnseitig festen, bevorzugt angeschweißten Lagerböcken 34,35, vergleiche hierzu auch die Figuren 6,7. Eine das Scharnierglied 10 durchsetzende zweite Achse 36 ist in dem Flügel 2 der Laderaumtür 1 drehbar gelagert. Bei geschlossener Laderaumtür 1 liegen die Mittelachsen beider Achse 11, 36 in einer zur geschlossenen Laderaumtür 1 parallelen Ebene 37.

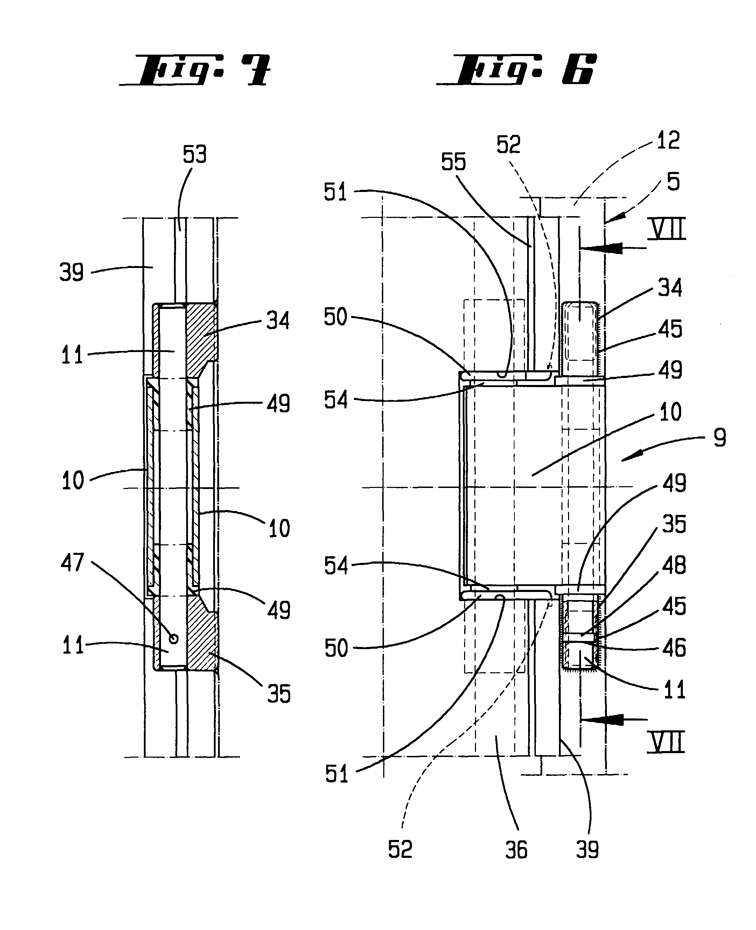

Ab einer Schnittlinie 38 des die Innenwandung 28 mit der Außenwandung 32 verbindenden Außenrandes 39 mit der Ebene 37 ist dieser zur Außenwandung 32 hin bogenförmig ausgebildet, vergleiche hierzu auch Figur 4, so daß der Flügel 2 der Laderaumtür 1 mit seinem Außenrand 39 problemlos um die Lagerböcke 34,35 verschwenkt werden kann.

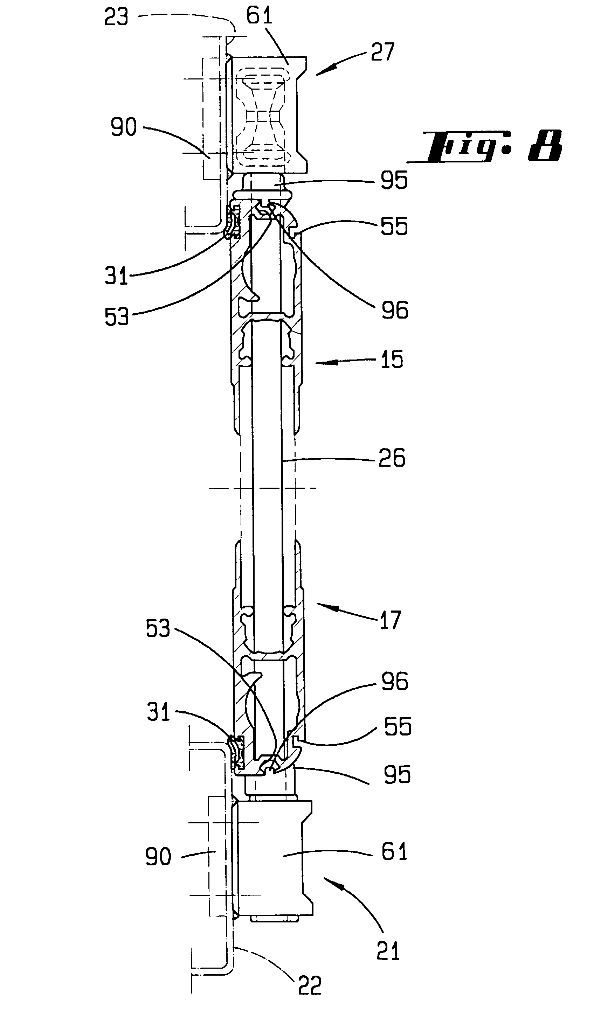

Figur 2 zeigt ferner, daß die zweite Achse 36 ein flach oval ausgebildetes Querschnittsprofil aufweist, so daß das Scharnierglied 10 die zweite Achse 36 form- und kraftschlüssig mit einem Ring 40 umschließt, vergleiche Figur 5. An diesem Ring 40 ist eine Anschlagleiste 41 angeordnet, welche bei einem Öffnungswinkel von etwa 0°, d.h. bei geschlossener Laderaumtür 1, auf einer türfesten Anschlagsfläche 42 aufliegt und damit den Öffnungswinkel beim Schließen der Tür begrenzt. Alternativ kann auch eine zweite Achse von rundem Querschnitt, bevorzugt aus V2A-Stahl vorgesehen werden.

Entsprechend zeigt Figur 3, wie der max. Öffnungswinkel von 270° durch einen auf einen türfesten Anschlagsteg 43 auftreffenden Ansatznocken 44 des Scharniergliedes 10 begrenzt wird, vergleiche auch Figur 4 und Figur 5.

Alle Anschläge bzw. Anschlagflächen sind bei jedem Öffnungswinkel des Scharniers 9 innerhalb der Ausnehmung 33 jeweils angeordnet. Weitere Anschlags- und Verriegelungselemente bekannter Art an z.B. der Außenfläche der Seitenwand 5 - hier nicht gezeigt - können ebenfalls weiter vorgesehen sein.

Nicht weiter gezeigt ist ferner, daß die Länge der zweiten Achse 36 der Höhe der Laderaumtür 1 etwa entspricht und sie einstückig ausgebildet sämtliche Scharnierglieder 10 der Scharniere 9 eines Flügels 2,3 durchsetzt.

Die Figuren 6,7 zeigen, gegenüber Figur 1 in vergrößerter Darstellung, ein Scharnier 9 und insbesondere die Lagerung des Scharniergliedes 10 auf der ersten Achse 11 und der zweiten Achse 36. In bekannter Weise ist das Scharnierglied 10 mittels eingesetzter Lagerbuchsen 49, z.B. aus Hart-Kunststoff, drehbar auf der ersten Achse 11 gelagert. Die erste Achse 11 ist vor der Stirnseite 12 der Seitenwand 5 in den Lagerböcken 34,35 feststehend gehalten. Die Lagerböcke 34,35 sind, verdeutlicht durch die Schweißnähte 45 darstellende Striche, auf die Stirnseite 12 aufgeschweißt. Ebenso ist alternativ eine Schraubverbindung möglich. Zur Sicherung der ersten Achse 11 weist der Lagerbock 35 eine quer zur Achse 11 verlaufende, zum Außenrand 39 der Laderaumtür 1 hin geöffnete Sacklochbohrung 46 und die erste Achse 11 eine korrespondierende Durchgangsbohrung 47 zur Aufnahme eines Schwerspannstiftes 48 auf. Da bei geschlossener Laderaumtür 1 dieser Schwerspannstift von dem Außenrand 39 überdeckt und damit nicht mehr zugänglich ist, ist dieses Scharnier 9 auch auf einfache Weise zollsicher ausgeführt.

Die zweite Achse 36 ist in laderaumtürfesten Lagern 50,50 von runden Aufnahmequerschnitt drehbar gehalten. Dabei decken die Lager 50,50 die Seitenflächen 51,51 der Ausnehmung 33 ab und ist das Lager mit einer Nase 52 in einer Aussparung im Außenrand 39 verriegelt. Ausgebildet ist die Aussparung hier als durchgängige, hinterschnittene Nut 53 von etwa T-förmigem Querschnitt. Die Lager 50, 50 weisen angeformte Distanzhalter 54 auf, von denen das Scharnierglied 10 fest eingefaßt ist, das so von den Seitenflächen 51 der Ausnehmung 33 bzw. der Seitenflächen oder Lager 50,50 selbst geringfügig beabstandet ist.

Da die Profile 14 bis 17 gleichartig sind, läuft die als Aussparungen für Nasen 52 der Lager 50 verwendete Nut 53 an allen vier Außenrändern um. Es liegt diese Nut 53 etwa mittig im Außenrand, wo ebenfalls etwa der Bogen hin zur Außenwandung 32 der Laderaumtür 1 beginnt. Am Ende dieses Bogens ist eine weitere hinterschnittene Nut 55, ebenfalls über die Profile 14 bis 17 umlaufend, vorgesehen. Zurückkehrend zu Figur 2 ist dort gezeigt, wie mittels der Nuten 53,55 eine im Querschnitt T-förmige Dichtung 56 gehalten ist. Mittels der Dichtung 56 kann bei einer einflügeligen Laderaumtür der gezeigte Flügel 2 in geschlossenem Zustand an einem - nicht gezeigten - Rahmen in abdichtender Anlage gehalten werden.

Bei der hier gezeigten zweiflügeligen Laderaumtür 1 sind jedoch die einander benachbarten Außenränder der Türflügel 1,2 in geschlossenem Zustand gering zueinander beabstandet. Der zweite Flügel 2 weist ebenfalls eine T-förmige Dichtung 57, im Querschnitt ähnlich der Dichtung 56, auf. Gehalten ist diese zweite Dichtung 57 ebenfalls in der außenrandseitigen Nut 53 und in der innenwandseitigen Nut 31, welche im Bereich der Stirnflächen die umlaufende Dichtung 30 aufnimmt. Die T-Form der Dichtungen 56, 57 ist derartig, daß die freistehenden Schenkel 58,59 jeweils den Abstand der beiden Türflügel überragen und zusätzlich den jeweils benachbarten Türflügel zur besseren Abdichtung überlappen.

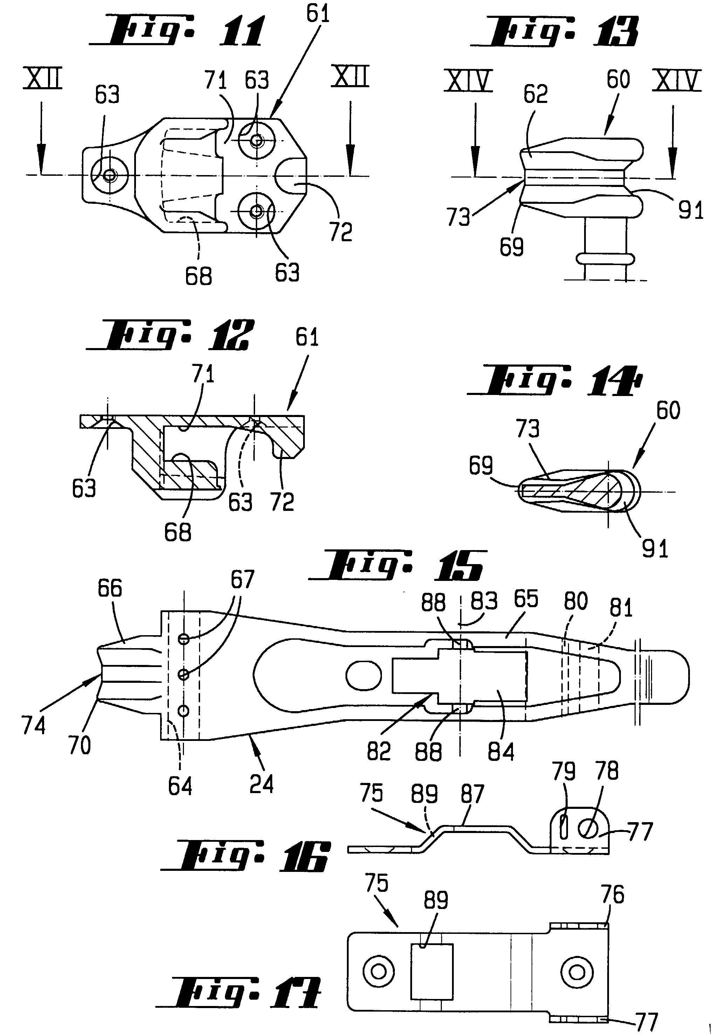

Anhand der Figuren 8 bis 17 wird die Verriegelung der einzelnen Flügel 2,3 der Laderaumtür 1 näher erläutert. Wie schon bei Figur 2 angesprochen, durchsetzen Übertragungsstangen 26 die Laderaumtür 1 mit Überständen. Zur Ausbildung der oberen Verriegelung 27 endet der obere Überstand der Übertragungsstange 26 in einem Drehkopf 60, vergleiche auch Figuren 13 und 14. Der Drehkopf 60 greift in verriegeltem Zustand der Laderaumtür 1 in eine schuhförmige Aufnahme 61 mit einem Fortsatz 62 ein. Die schuhförmige Aufnahme 61, vergleiche Figuren 11 und 12, ist mit Bohrungen 63 durchsetzenden Schrauben oder Nieten an der Stirnseite 23 des Daches 8 des Kastenaufbaues 4 befestigt, wobei innenseitig vorstehende Gegenlager 90 vorgesehen sind. Je nach Ausführung ist ebenso ein Anschweißen der Aufnahme möglich. Ein zweiter unterer Überstand der Übertragungsstange 26 durchsetzt in einer Bohrung 64 die Handhabe 24 und teilt diese nach Art eines zweiarmigen Hebels in einen Handgriff 65, in Figur 15 verkürzt dargestellt, und in einen zweiten Fortsatz 66. In der Handhabe 24 ist die Übertragungsstange 26 z.B. durch Verstiftung durch Löcher 67 verdrehsicher gehalten. Der zweite Fortsatz 66 greift ebenfalls in verriegeltem Zustand der Laderaumtür 1 in eine schuhförmige Aufnahme 61, die auf der Stirnseite 22 des Bodens 7 des Kastenaufbaus 4 in gleicher Art wie die obere Aufnahme 61 befestigt ist. Wie Figur 9 zeigt, füllen die Fortsätze 62,66 den Innenraum 68 der schuhförmigen Aufnahmen 61 nicht vollständig aus, so daß bei einem Verdrehen der Übertragungsstange 26 mittels des Handgriffs 65 zum Öffnen der Laderaumtür 1 die Fortsätze 62,66 sich aus der jeweiligen Aufnahme 61 heraus drehend und mit den freien Enden 69,70 sich auf dem Grund 71 der Aufnahmen 61 abstützend die Laderaumtür 1 von den Stirnseiten 22, 23 des Kastenaufbaues 4 wegdrücken. Unterstützt wird dieses Wegdrükken durch abragende Vorsprünge 72 an den Aufnahmen 61, so daß die Fortsätze 62,66 erst nach einem Verdrehwinkel der Übertragungstange 26 von etwa 90 von den Aufnahmen 61 freigegeben werden. Unterstützt wird dieses Herausdrehen und Wegdrücken durch entsprechende Profilierung 73,74 der Fortsätze 62,66. Ferner ist eine Aussparung 91 am Drehkopf 60 dem Vorsprung 72 angepaßt.

Auf die Stirnseite 22 des Bodens 8 des Kastenaufbaues 4 ist ein Bügel 75 aufgesetzt, von dem zwei Schenkel 76,77 abragen, die den Handgriff 65 zwischen sich einschließen. Die Schenkel 76,77 weisen jeweils Durchbrüche 78,79 auf, die mit Durchgangsbohrungen 80,81 des Handgriffs 65 fluchten, z.B. zur Durchführung von Plomben oder Schloßbügeln zur Verriegelung.

Ferner weist die Handhabe 24 eine federnd gelagerte Sperrklinke 82 auf. Die Sperrklinke ist um eine Achse 83 parallel zur Übertragungsstange schwenkbar gelagert. Zur Betätigung, d.h.zum Verschwenken um die Achse 83 weist die Sperrklinke einen Betätigungshebel 84 auf, der sich hin zu dem freien Ende des Handgriffs 65 erstreckt. Bei Niederdrücken des Betätigungshebels 84 auf die Stirnseite 22 zu, dreht sich die Sperrklinke 82 gegen die Kraft einer Feder 85 und wird eine Verriegelungsnase 86 aus einer Sperrstellung herausgeschwenkt, in der sie einen der Stirnseite 22 vorstehenden Rastvorsprung 87 des Bügels 75 durch einen Durchbruch 89, vergleiche Figuren 16 und 17, hintergreift. Dazu durchsetzt die Sperrklinke 82 in einem Durchbruch 92 den Handgriff 65 und ist in diesem Durchbruch 92 oder einer entsprechenden Vertiefung auch bevorzugt mittels Achsstummel 88,88 drehbar gelagert. Der Bügel 75 mit dem vorstehenden Rastvorsprung 87 ist an die Stirnseite 22 angeschraubt, wobei ein Gegenlager 93 verstärkend vorgesehen ist. Alternativ kann der Bügel 75 auch z.B. angeschweißt sein.

Wie noch Figur 8 zeigt, kann eine Drehlagerung der Übertragungsstange 26 mittels auf die Profile 15,17 aufgesetzter und an deren Rundungen angepaßter Lager aus einem Hartkunststoff 95,95 erfolgen, die mit Zapfen 96, 96 in die Nut 53 der Profile 15,17 für eine bessere Befestigung eingreifen.

## Patentansprüche

1. Laderaumtür (1), insbesondere stirnseitige Laderaumtür (1) für zum Beispiel einen von zwei Seitenwänden (5, 6), einem Boden (7) und einem Dach (8) gebildeten Kastenaufbau (4) eines Lastkraftwagens mit wenigstens einem an einem Außenrand (39) der Laderaumtür (1) angeordneten Scharnier (9) zur Öffnung der Laderaumtür (1) um mehr als 180°, insbesondere bis zu 270°, wobei die Laderaumtür (1) randseitig von Profilen (14, 15, 16, 17) aus Aluminium eingefaßt ist und das Scharnierglied (10) den Außenrand des Profils (14, 15, 16, 17) durchsetzend und um zwei Achsen (11, 36) drehbar angeordnet ist, von denen eine erste Achse (11) im Hinblick auf eine Flächenerstreckung der Laderaumtür (1) auf der einen Seite des Außenrandes (39), außerhalb der Laderaumtür (1), und eine zweite Achse (36) auf der anderen Seite des Außenrandes (39), innerhalb der Laderaumtür, angeordnet ist, und wobei weiter die Laderaumtür (1) am Außenrand (39) eine Innenwandung (28) zur dichtenden Zusammenwirkung mit dem Kastenaufbau (4) aufweist, gekennzeichnet durch ein die Laderaumtür (1) einfassendes, eine Innenwandung (28) und eine Außenwandung (32) bildendes Profil (14) aus Aluminium, wobei die Innenwandung (28) auch im Bereich des Scharniergliedes (10) in Längserstreckung der ersten bzw. zweiten Achse (11, 36) durchgängig ausgebildet ist, eine in der Außenwandung (32) vorgesehene, die Innenwandung (28) unversehrt lassende Ausnehmung (33) ausgebildet ist, und eine Abdeckung des Scharniergliedes (10) durch die Innenwandung (28) zwischen der ersten und der zweiten Achse (11, 36) und weiter gekennzeichnet dadurch, daß die Stirnseite (12, 13) einer Seitenwand über ihre volle Länge von einer überlappung (29) der Laderaumtür überdeckt ist, daß die zweite Achse (36) das Scharnierglied (10) durchsetzt und daß die zweite Achse in dem Flügel (2) der Laderaumtür (1) drehbar gelagert ist.

2. Laderaumtür nach Anspruch 1, dadurch gekennzeichnet, daß die Überlappung (29) eine Profilierung der Profile (14, 15, 16, 17) ist, wobei die Profilierung durchgängig und das Scharnierglied (10) in Längsrichtung der ersten bzw. zweiten Achse (11, 36) überdeckend ausgebildet ist.

3. Laderaumtür nach Anspruch 2, dadurch gekennzeichnet, daß die Überlappung (29) an der Innenwandung (28) der Laderaumtür (1) ausgebildet ist, und daß in der Ausnehmung (33) das nur von außen her einsetzbare Scharnierglied (10) angeordnet ist.

4. Laderaumtür nach Anspruch 2, dadurch gekennzeichnet, daß das Scharnierglied (10) als Profilabschnitt ausgebildet ist.

5. Laderaumtür nach Anspruch 1 oder 2, dadurch gekennzeichnet, daß die Innenwandung (28) mit der Überlappung (29) gegenüber der Außenwandung (32) in Überlappungsrichtung vorsteht und daß der Außenrand (39) von einer Schnittlinie (38) an zur Außenwandung (32) hin bogenförmig ausgebildet ist, wobei die Schnittlinie (38) in einer zur geschlossenen Laderaumtür (1) parallelen Ebene (37) durch die erste Achse (11) liegt.

6. Laderaumtür nach Anspruch 1, dadurch gekennzeichnet, daß die erste und zweite Achse (11, 36) bei geschlossener Laderaumtür in einer zur Laderaumtür (1) parallelen Ebene (37) liegen.

7. Laderaumtür nach Anspruch 1, dadurch gekennzeichnet, daß die erste Achse (11) das Scharnieglied (10) durchsetzt.

8. Laderaumtür nach Anspruch 1, dadurch gekennzeichnet, daß die zweite Achse (36) ein Querschnittsprofil aufweist derart, daß das Scharnieglied (10) die zweite Achse (36) form- und kraftschlüssig umschließt.

9. Laderaumtür nach Anspruch 8, dadurch gekennzeichnet, daß das Querschnittsprofil der zweiten Achse (36) flach oval ausgebildet ist.

10. Laderaumtür nach Anspruch 1, dadurch gekennzeichnet, daß die Achse, insbesondere die zweite Achse (36) aus zwei konzentrischen Achskörpern gebildet ist.

11. Laderaumtür nach Anspruch 10, dadurch gekennzeichnet, daß der innere Achskörper ein Stahlkörper ist, während der äußere Achskörper ein Aluminium-Körper ist.

12. Laderaumtür nach Anspruch 10, dadurch gekennzeichnet, daß der innere Achskörper einen kreisförmigen Querschnitt aufweist.

13. Laderaumtür nach Anspruch 1, dadurch gekennzeichnet, daß die zweite Achse (36) in laderaumtürfesten Lagern (50,50) von rundem Aufnahmequerschnitt gehalten ist, wobei die Lager (50,50) die Seitenflächen (51,51) der Ausnehmung (33) jeweils abdeckend angeordnet sind und jeweils mit einer Nase (52) in einer Aussparung (53) im Außenrand (39) verriegelt sind.

14. Laderaumtür nach Anspruch 13, dadurch gekennzeichnet, daß das Scharnierglied mittels Distanzhalter (54) beabstandet zu den Seitenflächen (51,51) der Ausnehmung (33) bzw. den Seitenflächen der Lager (50,50) selbst gehalten ist.

15. Laderaumtür nach Anspruch 1, dadurch gekennzeichnet, daß die Länge der zweiten Achse (36) der Höhe der Laderaumtür (1) etwa entspricht.

16. Laderaumtür nach Anspruch 1, dadurch gekennzeichnet, daß der max. Öffnungswinkel von 270° des Scharniers (9) von einem auf einen türfesten Anschlagsteg (43) auftreffenden Ansatznocken (44) des Scharniergliedes (10) begrenzt wird, wobei die Anschlagfläche (42) und der Ansatznocken jeweils (43) innerhalb der Ausnehmung angeordnet sind.

17. Laderaumtür nach Anspruch 1, dadurch gekennzeichnet, daß das Scharnierglied (10) eine Anschlagleiste (41) parallel zur zweiten Achse (36) aufweist, welche bei einem Öffnungswinkel von etwa 0° auf eine türfeste Anschlagfläche auftrifft, wobei die Anschlagleiste (41) und die Anschlagfläche (42) jeweils innerhalb der Ausnehmung angeordnet sind.

18. Laderaumtür nach Anspruch 1, dadurch gekennzeichnet, daß die erste Achse (11) in wenigstens zwei auf der Stirnseite (12) der Seitenwand (5) und vor dem Außenrand (39) der Laderaumtür (1) angeordneten Lagerböcken (34,35) gehalten ist und daß wenigstens ein Lagerbock (35) eine quer zur Achse (11) verlaufende, zum Außenrand (39) hin geöffnete Sacklochbohrung (46) und die Achse (11) eine korrespondierende Durchgangsbohrung aufweisen zur Aufnahme eines Schwerspannstiftes (48) zur Sicherung der ersten Achse (11).

19. Laderaumtür nach Anspruch 1 oder 2, dadurch gekennzeichnet, daß die Innenwandung (28) im Bereich der Überlappung (29) mit einer durchgängigen Dichtung (30) versehen ist.

20. Laderaumtür nach Anspruch 1, dadurch gekennzeichnet, daß die randseitigen Profile (14,15,16,17) gleichen Querschnitt aufweisen.

21. Laderaumtür nach Anspruch 1 oder 2, dadurch gekennzeichnet, daß die Laderaumtür (1) auf den Überlappungen (29) mit einer durchgängigen Dichtung (30) für jeden Flügel (2,3) versehen ist.

22. Laderaumtür nach Anspruch 1 oder 2, dadurch gekennzeichnet, daß die Innenwandung (28) jedes Flügels (2,3) im Bereich der Überlappungen (29) mit durchgängig hinterschnittenen Nuten (31) versehen ist zur Aufnahme einer durchgängigen Dichtung (30).

23. Laderaumtür nach Anpruch 1, dadurch gekennzeichnet, da β die Außenränder (39) und die Außenwandung (32) mit hinterschnittenen Nuten (53,55) am Beginn bzw. Ende eines Bogens versehen sind zur Befestigung von Nasen an rechtwinklig zueinander stehenden Schenkeln einer T-förmigen Dichtung (56).

24. Laderaumtür nach den Ansprüchen 22 oder 23, dadurch gekennzeichnet, daß bei geschlossenen zweiflügeligen Laderaumtüren die zwei in geschlossenem Zustand benachbarten Außenränder (39,39) gering beabstandet zueinander angeordnet sind, daß ein erster Flügel (2) eine erste T-förmige Dichtung (56), gehalten in den außenrandseitig und den außenwandseitig angeordneten Nuten (53,55), aufweist, und daß ein zweiter Flügel (3) eine zweite T-förmige Dichtung (57) gehalten in den außenrandseitig und innenwandseitig angeordneten Nuten (53,31) aufweist.

25. Laderaumtür nach Anspruch 1, dadurch gekennzeichnet, daß eine Verriegelungsvorrichtung vorgesehen ist und daß in der Laderaumtür (1) wenigstens eine Übertragungsstange in ihrer Längsachse verdrehbar gelagert ist, die zur Verriegelung der Laderaumtür an Stirnseiten des Kastenaufbaus Überstände aufweist, die jeweils über Ränder der Laderaumtür vorstehen, wobei die Übertragungsstange (26) die Laderaumtür (1) durchsetzt, und wobei ein erster Überstand in einem Drehkopf (60) mit einem ersten Fortsatz (62) endet, und wobei ein zweiter Überstand in einer Handhabe (24) mit einem zweiten Fortsatz (66) endet, und wobei der erste und der zweite Fortsatz (62,66) in verriegeltem Zustand der Laderaumtür (1) jeweils in eine schuhförmige Aufnahme (61,61) eingreifen, die auf Stirnseiten (22,23) des Kastenaufbaus (4) angeordnet sind.

26. Laderaumtür nach Anspruch 25, dadurch gekennzeichnet, daß die Handhabe (24) von der Übertragungsstange (26) nach Art eines zweiarmigen Hebels in einen Handgriff (65) und den zweiten Fortsatz (66) geteilt wird.

27. Laderaumtür nach Anspruch 26, dadurch gekennzeichnet, daß bei Verdrehen der Übertragungsstange (26) mittels des Handgriffs (65) zum Öffnen der Laderaumtür (1) die Fortsätze (62,66) sich aus der jeweiligen Aufnahme (61,61) herausdrehend die Laderaumtür (1) von den Stirnseiten (22,23) des Kastenaufbaus (4) wegdrücken und nach einem Verdrehwinkel von etwa 90° von den Aufnahmen (61,61) freigegeben werden.

28. Laderaumtür nach Anspruch 25, dadurch gekennzeichnet, daß eine Aufnahme (61,61) einen Überstand aufweist, welcher im Verschlußzustand einen zweiten Fortsatz (66) übergreift, und daß die Aufnahme weiter eine gekrümmt verlaufende Abdrückfläche aufweist für eine Abdrückbewegung des zweiten Fortsatz (66) im Zuge eines Öffnungsvorganges, wobei in einem Querschnitt der Überstand und die Abdrückfläche im wesentlichen sich zu einer U-förmigen Gestaltung ergänzen.

29. Laderaumtür nach Anspruch 25, dadurch gekennzeichnet, daß die Handhabe (24) eine federnd gelagerte Sperrklinke (82) aufweist und daß die Sperrklinke (82) bei verriegelter Laderaumtür (1) mit einer Verriegelungsnase (86) einen Rastvorsprung (87) hintergreift, der an der Stirnseite (22) des Kastenaufbaues (4) angeordnet ist.

30. Laderaumtür nach Anspruch 26, dadurch gekennzeichnet, daß auf einer Stirnseite (22) des Kastenaufbaues (4) ein Bügel (75) aufgesetzt ist, daß von dem Bügel (75) zwei Schenkel (76,77) abragen, welche den Handgriff (65) zwischen sich einschließen, und daß die Schenkel (76,77) jeweils Durchbrüche (78,79) aufweisen, die mit Durchgangsbohrungen (80,81) im Handgriff (65) fluchten.

31. Laderaumtür nach Anspruch 30, dadurch gekennzeichnet, daß die am Bügel (75) der über die Stirnseite (22) vorstehenden Rastvorsprung (87) angeordnet ist, welcher von der Verriegelungsnase (86) der Sperrklinke (82) untergreifbar ist.

32. Laderaumtür nach Anspruch 29, dadurch gekennzeichnet, daß an dem Handgriff (65) die Sperrklinke (82) um eine Achse (83) parallel zur Übertragungsstange (26) schwenkbar gelagert ist, daß die Sperrklinke (82) einen Durchbruch (92) im Handgriff (65) durchsetzt und daß von der Sperrklinke (82) ein Betätigungshebel (85) hin zu dem freien Ende des Handgriffs (65) abragt.

33. Laderaumtür nach Anspruch 29, dadurch gekennzeichnet, daß zur Betätigung der Sperrklinke der sich im wesentlichen parallel zu dem Handgriff erstreckende Handhabungsfortsatz der Sperrklinke in entgegengesetzter Drehrichtung bezüglich des Handgriffs zu betätigen ist.

## Claims

1. Cargo space door (1), in particular end cargo space door (1) for, for example, a box structure (4) of a truck formed by two side walls (5, 6), a floor (7) and a roof (8), with at least one hinge (9) arranged at an outer edge (39) of the cargo space door (1) for opening the cargo space door (1) by more than 180°, in particular up to 270°, wherein the cargo space door (1) which has leaves (2) is encompassed at the edges by aluminium profiles (14, 15, 16, 17) and the hinge member (10) is arranged passing through the outer edge of the profile (14, 15, 16, 17) and rotatable about two shafts (11, 36), of which a first shaft (11) with respect to an areal extent of the cargo space door (1) is arranged on one side of the outer edge (39), outside the cargo space door (1), and a second shaft (36) which passes through the hinge member (10) and is mounted in the leaf (2) of the cargo space door (1) is arranged on the other side of the outer edge (39), within the cargo space door, and wherein furthermore the cargo space door (1) at the outer edge (39) has an inner wall (28) for sealing cooperation with the box structure (4), characterised by an aluminium profile (14) encompassing the cargo space door (1) and forming an inner wall (28) and an outer wall (32), wherein the inner wall (28) is continuous even in the region of the hinge member (10) in the longitudinal extent of the first or second shaft (11, 36), a recess (33) provided in the outer wall (32) and leaving the inner wall (28) intact is formed, and covering of the hinge member (10) by the inner wall (28) between the first and second shafts (11, 36), and further characterised in that the end face (12, 13) of one side wall is covered over its full length by an overlap (29) of the cargo space door.

2. Cargo space door according to claim 1, characterised in that the overlap (29) is a profiling of the profiles (14, 15, 16, 17), wherein the profiling is continuous and designed overlapping the hinge member (10) in the longitudinal direction of the first or second shaft (11, 36).

3. Cargo space door according to claim 2, characterised in that the overlap (29) is formed on the inner wall (28) of the cargo space door (1), and in that in the recess (33) is arranged the hinge member (10) which can be inserted only from the outside.

4. Cargo space door according to claim 2, characterised in that the hinge member (10) is designed as a profile section.

5. Cargo space door according to claim 1 or 2, characterised in that the inner wall (28) with the overlap (29) projects from the outer wall (32) in the direction of overlap and in that the outer edge (39) is arcuate from a section line (38) to the outer wall (32), wherein the section line (38) lies in a plane (37) through the first shaft (11) which is parallel to the closed cargo space door (1) .

6. Cargo space door according to claim 1, characterised in that the first and second shafts (11, 36) when the cargo space door is closed lie in a plane (37) parallel to the cargo space door (1).

7. Cargo space door according to claim 1, characterised in that the first shaft (11) passes through the hinge member (10) .

8. Cargo space door according to claim 1, characterised in that the second shaft (36) has a cross-sectional profile such that the hinge member (10) encloses the second shaft (36) in form-locking and force-locking relationship.

9. Cargo space door according to claim 8, characterised in that the cross-sectional profile of the second shaft (36) is of flat oval design.

10. Cargo space door according to claim 1, characterised in that the shaft, in particular the second shaft (36), is formed from two concentric shaft bodies.

11. Cargo space door according to claim 10, characterised in that the inner shaft body is a steel body, while the outer shaft body is an aluminium body.

12. Cargo space door according to claim 10, characterised in that the inner shaft body has a circular cross-section.

13. Cargo space door according to claim 1, characterised in that the second shaft (36) is held in bearings (50, 50) of round receiving cross-section fixed to the cargo space door, wherein the bearings (50, 50) are arranged in each case covering the side surfaces (51, 51) of the recess (33) and each locked with a lug (52) in an opening (53) in the outer edge (39).

14. Cargo space door according to claim 13, characterised in that the hinge member is held by means of distance holders (54) at a distance from the side surfaces (51, 51) of the recess (33) or from the side surfaces of the bearings (50, 50) themselves.

15. Cargo space door according to claim 1, characterised in that the length of the second shaft (36) roughly corresponds to the height of the cargo space door (1).

16. Cargo space door according to claim 1, characterised in that the maximum opening angle of 270° of the hinge (9) is limited by a heel projection (44) of the hinge member (10) impinging on a stop web (43) fixed to the door, wherein the stop face (42) and the heel projection are arranged in each case (43) within the recess.

17. Cargo space door according to claim 1, characterised in that the hinge member (10) has a stop bar (41) parallel to the second shaft (36), which at an opening angle of about 0° impinges on a stop face fixed to the door, wherein the stop bar (41) and the stop face (42) are in each case arranged within the recess.

18. Cargo space door according to claim 1, characterised in that the first shaft (11) is held in at least two bearing blocks (34, 35) arranged on the end face (12) of the side wall (5) and in front of the outer edge (39) of the cargo space door (1) and in that at least one bearing block (35) has a blind hole (46) running transversely to the shaft (11) and opening towards the outer edge (39) and the shaft (11) has a corresponding through-hole for receiving a heavy dowel pin (48) for securing the first shaft (11).

19. Cargo space door according to claim 1 or 2, characterised in that the inner wall (28) in the region of the overlap (29) is provided with a continuous seal (30).

20. Cargo space door according to claim 1, characterised in that the edge profiles (14, 15, 16, 17) have the same cross-section.

21. Cargo space door according to claim 1 or 2, characterised in that the cargo space door (1) on the overlaps (29) is provided with a continuous seal (30) for each leaf (2, 3).

22. Cargo space door according to claim 1 or 2, characterised in that the inner wall (28) of each leaf (2, 3) in the region of the overlaps (29) is provided with continuously undercut grooves (31) for receiving a continuous seal (30).

23. Cargo space door according to claim 1, characterised in that the outer edges (39) and the outer wall (32) are provided with undercut grooves (53, 55) at the beginning and end of an arc, for fixing lugs to arms of a T-shaped seal (56) which are at right angles to each other.

24. Cargo space door according to claim 22 or 23, characterised in that, when two-leaf cargo space doors are closed, the two outer edges (39, 39) which are adjacent in the closed state are arranged a short distance apart from each other, in that a first leaf (2) has a first T-shaped seal (56), held in the grooves (53, 55) arranged at the outer edge and the outer wall, and in that a second leaf (3) has a second T-shaped seal (57), held in the grooves (53, 31) arranged at the outer edge and the inner wall.

25. Cargo space door according to claim 1, characterised in that a locking device is provided and in that in the cargo space door (1) is mounted, so as to be rotatable in its longitudinal axis, at least one transmission rod which for locking the cargo space door to end faces of the box structure has projecting portions which in each case project beyond edges of the cargo space door, wherein the transmission rod (26) passes through the cargo space door (1), and wherein a first projecting portion ends in a rotary head (60) with a first extension (62), and wherein a second projecting portion ends in a handle (24) with a second extension (66), and wherein the first and second extensions (62, 66) in the locked state of the cargo space door (1) each engage in a shoe-like receptacle (61, 61), which are arranged on end faces (22, 23) of the box structure (4).

26. Cargo space door according to claim 25, characterised in that the handle (24) is divided by the transmission rod (26) after the fashion of a two-armed lever into a hand grip (65) and the second extension (66).

27. Cargo space door according to claim 26, characterised in that, on rotation of the transmission rod (26) by means of the hand grip (65) for opening the cargo space door (1), the extensions (62, 66), rotating out of the respective receptacle (61, 61), push the cargo space door (1) away from the end faces (22, 23) of the box structure (4) and, after an angle of rotation of about 90°, are released from the receptacles (61, 61).

28. Cargo space door according to claim 25, characterised in that a receptacle (61, 61) has a projecting portion which in the closed state engages over a second extension (66), and in that the receptacle further has a curved push-back surface for a push-back movement of the second extension (66) in the course of an opening process, wherein in a cross-section the projecting portion and the push-back surface essentially complement each other to form a U shape.

29. Cargo space door according to claim 25, characterised in that the handle (24) has a spring-mounted pawl (82) and in that when the cargo space door (1) is locked the pawl (82) engages by a locking lug (86) behind a latch protuberance (87) which is arranged on the end face (22) of the box structure (4).

30. Cargo space door according to claim 26, characterised in that on an end face (22) of the box structure (4) is mounted a stirrup member (75), in that from the stirrup member (75) project two arms (76, 77) which enclose the hand grip (65) between them, and in that the arms (76, 77) each have apertures (78, 79) which are aligned with through-holes (80, 81) in the hand grip (65).

31. Cargo space door according to claim 30, characterised in that on the stirrup member (75) is arranged the latch protuberance (87) which protrudes beyond the end face (22) and under which can engage the locking lug (86) of the pawl (82).

32. Cargo space door according to claim 29, characterised in that the pawl (82) is mounted on the hand grip (65) so as to be pivotable about an axis (83) parallel to the transmission rod (26), in that the pawl (82) passes through an aperture (92) in the hand grip (65) and in that an operating lever (85) projects from the pawl (82) towards the free end of the hand grip (65).

33. Cargo space door according to claim 29, characterised in that, for operation of the pawl, the handling extension of the pawl which extends essentially parallel to the hand grip can be operated in the opposite direction of rotation relative to the hand grip.

## Revendications

1. Porte (1) pour espace de chargement, en particulier porte frontale destinée par exemple à une structure de caisse (4) d'un véhicule industriel ou d'un poids lourd, formée de deux parois latérales (5, 6), d'un fond (7) et d'un toit (8). comprenant au moins une charnière (9) disposée sur un bord extérieur (39) de la porte pour espace de chargement, pour l'ouverture de cette porte pour espace de chargement sur plus de 180°, en particulier jusqu'à 270°, dans laquelle la porte (1) pour espace de rangement est bordée latéralement de profilés (14, 15, 16, 17) d'aluminium et l'organe de charnière traversant le bord extérieur des profilés (14, 15, 16, 17) est disposé rotatif autour de deux axes (11, 36) dont le premier (11) est disposé par rapport à l'extension en surface de la porte (1) pour espace de chargement d'un côté du bord extérieur (39), vers l'extérieur de la porte (1) pour espace de chargement, et dont un deuxième axe (36) est disposé de l'autre côté du bord extérieur (39), à l'intérieur de la porte pour espace de chargement, et dans laquelle, de plus, la porte (1) pour espace de chargement comporte sur le bord extérieur (39) une paroi intérieure (28) pour assurer son étanchéité avec la structure de caisse (4),
caractérisée par
un profilé d'aluminium (14) constituant une paroi intérieure (28) et une paroi extérieure (32), dans laquelle la paroi intérieure (28) est réalisée traversante dans le sens de la longueur du premier ou du deuxième axe (11, 36) également dans la zone de l'organe de charnière (10), un évidement (33) étant réalisé dans la paroi extérieure (32) en laissant la paroi intérieure (28) intacte, et par un recouvrement de l'organe de charnière (10) passant par la paroi intérieure (28) entre le premier et le second axe (11, 36)
et caractérisée en outre en ce que
la surface frontale (12, 13) d'une paroi latérale est recouverte sur toute sa longueur d'un recouvrement (29) de la porte pour espace de chargement, en ce que le deuxième axe (36) traverse l'organe de charnière et en ce que le deuxième axe est monté rotatif dans le battant (2) de la porte (1) pour espace de chargement.

2. Porte pour espace de chargement selon la revendication 1, caractérisée en ce que le recouvrement (29) est un profilage des profilés (14, 15, 16, 17), dans laquelle le profilage s'étend sur toute la longueur, et dans laquelle l'organe de charnière (10) est réalisé recouvrant sur l'extension en longueur du premier ou du deuxième axe (11, 36).

3. Porte pour espace de chargement selon la revendication 2, caractérisée en ce que le recouvrement (29) est réalisé sur la paroi intérieure (28) de la porte (1) pour espace de chargement, et en ce que l'organe de charnière (10) susceptible d'être inséré uniquement de l'extérieur est disposé dans la cavité (33).

4. Porte pour espace de chargement selon la revendication 2, caractérisée en ce que l'organe de charnière (10) est constitué d'un tronçon de profilé.

5. Porte pour espace de chargement selon la revendication 1 ou 2, caractérisée en ce que la paroi intérieure (28) fait saillie par le recouvrement (29) par rapport à la paroi extérieure (32) dans la direction de recouvrement, et en ce que le bord extérieur (39) d'une ligne de coupe (38) est réalisé en forme arquée vers l'extérieur par rapport à la paroi extérieure (32). la ligne de coupe (38) étant disposée par le premier axe (11) dans un plan (37) parallèle à la porte (1) pour un espace de chargement en position fermée.

6. Porte pour espace de chargement selon la revendication 1, caractérisée en ce que le premier et le second axes (11, 36) sont placés dans un plan (37) parallèle à la porte (1) pour espace de chargement lorsque celle-ci est fermée.

7. Porte pour espace de chargement selon la revendication 1. caractérisée en ce que le premier axe (11) traverse l'organe de charnière (10).

8. Porte pour espace de chargement selon la revendication 1, caractérisée en ce que le deuxième axe (36) présente un profil de section transversale tel que l'organe de charnière (10) entoure le deuxième axe (36) de façon ajustée quant à sa forme et en assurant la liaison mécanique à force entre les deux éléments.

9. Porte pour espace de chargement selon la revendication 8, caractérisée en ce que le profil de section transversale du deuxième axe (36) est réalisé en forme ovale aplatie.

10. Porte pour espace de chargement selon la revendication 1, caractérisée en ce que l'axe, en particulier le deuxième axe (36), est réalisé en deux corps d'axe concentriques.

11. Porte pour espace de chargement selon la revendication 10, caractérisée en ce que le corps d'axe intérieur est un corps en acier, tandis que le corps d'axe extérieur est un corps en aluminium.

12. Porte pour espace de chargement selon la revendication 10, caractérisée en ce que le corps d'axe intérieur présente une section transversale de forme circulaire.

13. Porte pour espace de chargement selon la revendication 1, caractérisée en ce que le deuxième axe (36) est maintenu dans des paliers (50, 50) solidaires de la porte pour un espace de chargement, et présentant une section transversale de réception ronde, les paliers (50. 50) étant disposés chacun en recouvrement des surfaces latérales (51, 51) de la cavité (33), et étant chacun verrouillé par un bec ou ergot (52) dans une découpe (53) dans le bord extérieur (39).

14. Porte pour espace de chargement selon la revendication 13, caractérisée en ce que l'organe de charnière est maintenu, à l'aide de supports d'écartement (54), à distance des surfaces latérales (51, 51) de la cavité (33), ou bien est auto-maintenu par les surfaces latérales des paliers (50, 50).

15. Porte pour espace de chargement selon la revendication 1, caractérisée en ce que la longueur du deuxième axe (36) correspond sensiblement à la hauteur de la porte (1) pour espace de chargement.

16. Porte pour espace de chargement selon la revendication 1, caractérisée en ce que l'angle maximum d'ouverture de 270° de la charnière (9) est limité par un ergot (44) en saillie de l'organe de charnière (10) venant en appui sur une nervure de butée (43) solidaire de la porte, la surface de butée (42) et l'ergot en saillie étant disposés chacun (43) à l'intérieur de la cavité.

17. Porte pour espace de chargement selon la revendication 1, caractérisée en ce que l'organe de charnière (10) comporte une barrette de butée (41) parallèle au deuxième axe (36), et qui pour un angle d'ouverture d'environ 0° vient en butée sur une surface de butée solidaire de la porte, la barrette de butée (41) et la surface de butée (42) étant chacune disposées à l'intérieur de la cavité.

18. Porte pour espace de chargement selon la revendication 1, caractérisée en ce que le premier axe (11) est maintenu dans au moins deux blocs de palier (34, 35) montés sur la face frontale (12) de la paroi latérale (5) et devant le bord extérieur (39) de la porte (1) pour espace de chargement, et en ce qu'au moins un bloc de palier (35) comporte un alésage (46) de trou borgne courant transversalement à l'axe (11) et ouvert vers le bord extérieur (39), et en ce que l'axe (11) comporte un alésage traversant correspondant, destiné à recevoir une broche montée à force (48) pour fixer en position le premier axe (11).

19. Porte pour espace de chargement selon la revendication 1 ou 2, caractérisée en ce que la paroi intérieure (28) est munie, dans la zone de recouvrement (29), d'un joint d'étanchéité continu (30).

20. Porte pour espace de chargement selon la revendication 1, caractérisée en ce que les profilés de bordure (14, 15, 16, 17) présentent la même section transversale.

21. Porte pour espace de chargement selon la revendication 1 ou 2, caractérisée en ce que la porte (1) pour un espacement de chargement est munie, sur les recouvrements (29), d'un joint d'étanchéité continu (30) pour chaque battant (2, 3).

22. Porte pour espace de chargement selon la revendication 1 ou 2, caractérisée en ce que la paroi intérieure (28) de chaque battant (2, 3) est munie, dans la zone des recouvrements (29), de rainures (31) continues, en contre-dépouille et aptes à recevoir un joint d'étanchéité continu (30).

23. Porte pour espace de chargement selon la revendication 1, caractérisée en ce que les bords extérieurs (39) et la paroi extérieure (32) sont munis, au début et à la fin d'un arc, de rainures en contre-dépouille (53, 55), afin de permettre de fixer des becs ou ergots de retenue des branches perpendiculaires l'une à l'autre d'un joint d'étanchéité (56) en forme de T.

24. Porte pour espace de chargement selon les revendications 22 ou 23, caractérisée en ce que, lorsque les deux battants de la porte sont fermés, les deux bords extérieurs (39, 39) voisins à l'état fermé, sont disposés à faible distance l'un de l'autre, en ce qu'un premier battant (2) comporte un premier joint d'étanchéité (56) en forme de T, maintenu dans des rainures (53, 55) disposées du côté du bord extérieur et de la paroi extérieure, et en ce qu'un deuxième battant (3) comporte un deuxième joint d'étanchéité (57) en forme de T, maintenu dans les rainures (53, 31) disposées du côté du bord extérieur et du côté de la paroi intérieure.

25. Porte pour espace de chargement selon la revendication 1, caractérisée en ce qu'elle est munie d'un dispositif de verrouillage, et en ce que dans la porte (1) pour espace de chargement, est montée rotative selon son axe longitudinal, au moins une barre de transmission qui comporte, pour le verrouillage de la porte pour espace de chargement sur les faces frontales de la structure de caisse, des parties en saillie qui chacune font saillie sur les bords de la porte pour espace de chargement, en ce que la barre de transmission (26) traverse la porte (1) pour espace de chargement, en ce qu'une première partie en saillie dans une tête rotative (60), se termine par un premier prolongement (62), en ce qu'une deuxième partie en saillie dans une poignée (24) se termine par un deuxième prolongement (66), et en ce que le premier et le deuxième prolongements (62, 66) s'engagent, à l'état verrouillé de la porte (1) pour espace de chargement, chacun dans un logement (61, 61) en forme de chaussure, les logements étant disposés sur les faces frontales (22, 23) de la structure de caisse (4).

26. Porte pour espace de chargement selon la revendication 25, caractérisée en ce que la poignée (24) de la barre de transmission (26) est divisée, à la façon d'un levier à deux bras, en une poignée (65) et en un deuxième prolongement (66).

27. Porte pour espace de chargement selon la revendication 26, caractérisée en ce que, au cours de la rotation de la barre de transmission (26), sous l'action de la poignée (65), pour ouvrir la porte (1) pour espace de chargement les prolongements (62, 66) sont pressés vers l'extérieur hors du logement correspondant (61, 61) en tournant vers l'ouverture sur la porte (1) pour espace de chargement prévue sur les faces frontales (22, 23) de la structure (4) de caisse, et sont libérés des logements (61, 61) après un angle de rotation d'environ 90°.

28. Porte pour espace de chargement selon la revendication 25, caractérisée en ce qu'un logement (61, 61) comporte une partie en saillie qui, à l'état fermé, emprisonne un deuxième prolongement (66), et en ce que le logement comporte en outre une surface de pressage d'allure courbée, pour réaliser un déplacement de libération de pressage du deuxième prolongement (66) au cours d'un processus d'ouverture, la partie en saillie et la surface de pressage prenant, en section transversale, sensiblement une configuration en forme de U.

29. Porte pour espace de chargement selon la revendication 25, caractérisée en ce que la poignée (24) comporte un cliquet de verrouillage (82) monté rotatif avec une sollicitation élastique, et en ce que le cliquet de verrouillage (82), lorsque la porte (1) pour espace de chargement est verrouillée, accroche par l'arrière, par l'intermédiaire d'un bec de verrouillage (86), une barrette de verrouillage (87) disposée sur la face frontale (22) de la structure de caisse (4).

30. Porte pour espace de chargement selon la revendication 26, caractérisée en ce qu'est monté sur une face frontale (22) de la structure (4) de caisse, un étrier (75) d'ou partent deux branches (76, 77) qui enferment entre elles la poignée (65), et en ce que chacune des branches (76, 77) présente des découpes (78, 79) qui s'ajustent sur des alésages ou trous (80, 81) traversants de la poignée (65).

31. Porte pour espace de chargement selon la revendication 30, caractérisée en ce qu'est disposée sur l'étrier (75) une barrette de verrouillage (87), en saillie sur la face frontale (22), et qui est susceptible d'être accrochée en retenue par le bec de verrouillage (86) du cliquet de verrouillage (82).

32. Porte pour espace de chargement selon la revendication 29, caractérisée en ce que le cliquet de verrouillage (82) est monté sur la poignée (65) pivotant autour d'un axe (83) parallèle à la barre (26) de transmission, en ce que le cliquet de verrouillage (82) traverse une découpe (92) dans la poignée (65) et en ce que du cliquet de verrouillage (82) fait saillie un levier d'actionnement (85), vers l'extrémité libre de la poignée (65) en la sollicitant.

33. Porte pour espace de chargement selon la revendication 29, caractérisée en ce que l'actionnement du cliquet de verrouillage est obtenu en actionnant, dans le sens de rotation opposé à celui de la poignée, le prolongement de manoeuvre du cliquet de verrouillage s'étendant de façon sensiblement parallèle à la poignée.
